# EUROPEAN PATENT APPLICATION

(11) **EP 4 832 116 A1**
(43) Date of publication of application: **28.10.2026**
(21) Application number: 24907231.5
(22) Date of filing: 09.12.2024
(51) Int. Cl.: H01M 4/62, C08F 212/06, C08F 220/10, H01M 4/13, H01M 4/139

(54) **ELECTRODE BINDER COMPOSITION, ELECTRODE SLURRY, ELECTRODE, SECONDARY BATTERY, PRODUCTION METHOD FOR ELECTRODE, AND PRODUCTION METHOD FOR ELECTRODE SLURRY**

(30) Priority: 19.12.2023 JP 2023214286; 25.10.2024 JP 2024188626; 25.10.2024 JP 2024188627
(71) Applicant: Resonac Corporation, Tokyo 105-7325 (JP)
(72) Inventor: NAKAYAMA, Keito, Tokyo 105-7325 (JP); KONNO, Kaoru, Tokyo 105-7325 (JP); KAWAHARA, Yuta, Tokyo 105-7325 (JP); IIZUKA, Tatsuya, Tokyo 105-7325 (JP); IKEHATA, Ryohsuke, Tokyo 105-7325 (JP); HORIKOSHI, Hideo, Tokyo 105-7325 (JP)
(74) Representative: Berggren Oy
(86) International application number: PCT/JP2024/043487
(87) International publication number: WO 2025/134846

(57) **Abstract**

An electrode binder composition includes an electrode binder polymer having a first functional group that is at least one selected from the group consisting of a carboxy group and a carboxy group forming a salt and a second functional group that is at least one selected from the group consisting of an isocyanato group and a blocked isocyanato group, and an aqueous medium. The breaking strength S (St) of the film obtained by drying the electrode binder composition under the conditions of under atmospheric pressure at 23°C and at an absolute humidity of 10 g/m³ for 5 days, and then, under 0.01 MPa or less at 60°C for 12 hours is 4.00 MPa or higher.

## Description

### [Technical Field]

The present disclosure relates to an electrode binder composition, an electrode slurry, an electrode, a secondary battery, a method for manufacturing an electrode, and a method for manufacturing an electrode slurry.

### [Background Art]

Secondary batteries can be reduced in size and weight, and hence have been widely used as power supplies for notebook personal computers, mobile phones, power tools, electronic communication equipment, and the like. In recent years, secondary batteries have also been used as power supplies for electric vehicles and hybrid vehicles, and the like. A typical example of a secondary battery may include a lithium ion secondary battery.

A secondary battery includes a positive electrode including a metal oxide, or the like as an active material, a negative electrode including a carbon material such as graphite as an active material, and an electrolytic solution. The positive electrode and the negative electrode include a current collector and an electrode active material layer formed on the current collector. The electrode active material layer usually contains a binder, and by means of the binder, the active materials are bound together, and the active material and the current collector are bound together. Examples of binders for use in the secondary battery may include those described in PTL 1 and PTL 2.

PTL 1 discloses a secondary battery electrode including 100 parts by mass of at least one polymer selected from the group consisting of a styrene-butadiene copolymer and a copolymer resulting from a (meth)acrylic acid ester and a vinyl monomer having an acid component; and 1 to 20 parts by mass of at least one nonionic surfactant selected from the group consisting of polyoxyethylene alkyl ether derivatives, polyoxyethylene-polyoxypropylene condensates and polyoxyethylene-polyoxypropylene alkyl ether derivatives, having a cloudy point of 70°C or lower.

PTL 2 discloses a binder for a lithium ion secondary battery electrode having a glass transition temperature of 30°C or lower, obtained by emulsion polymerization of 15 to 70 mass% of an ethylenically unsaturated monomer including styrene, an ethylenically unsaturated carboxylic acid ester, an ethylenically unsaturated carboxylic acid, and an internal crosslinking agent as essential components on the basis of the total amount of the ethylenically unsaturated monomers in the presence of a surfactant.

Furthermore, PTL 3 discloses a binder for an electrode including a polymer having a structural unit derived from an alkyl (meth)acrylate ester monomer, a structural unit derived from a specific structural monomer having an aromatic group, and a structural unit derived from a monomer having at least one selected from the group consisting of an epoxy group, a (blocked) isocyanate group, and an urethane group.

### [Citation List]

### [Patent Literature]

[PTL 1] Japanese Patent Application Publication No. 2014-239070
[PTL 2] Japanese Patent Application Publication No. 2011-243464
[PTL 3] WO 2023/053863

### [Summary of Invention]

### [Technical Problem]

In recent years, secondary batteries have been required to maintain their battery performances sufficiently, even when they are exposed to high-temperature environment for a long time, namely, to have excellent high-temperature storability.

Under such circumstances, it is an object of the present disclosure to provide an electrode binder composition, an electrode slurry, an electrode, capable of obtaining a secondary battery having excellent high-temperature storability, a secondary battery, a method for manufacturing the electrode, and a method for manufacturing the electrode slurry.

### [Solution to Problem]

The present disclosure includes the following aspects.
<1> An electrode binder composition, including: an electrode binder polymer having a first functional group which is at least one selected from the group consisting of a carboxy group and a carboxy group forming a salt, and a second functional group which is at least one selected from the group consisting of an isocyanato group and a blocked isocyanato group; and an aqueous medium, in which
   the breaking strength S (St) of the film obtained by drying the electrode binder composition under the conditions of under atmospheric pressure at 23°C and at an absolute humidity of 10 g/m³ for 5 days, and then under 0.01 MPa or less at 60°C for 12 hours is 4.00 MPa or higher.
<2> The electrode binder composition according to <1>, in which the breaking strength S (110) after further storage of the film under atmospheric pressure at 110°C and at an absolute humidity of 10 g/m³ for 1 hour is 6.00 MPa or higher.
<3> The electrode binder composition according to <1> or <2>, in which the value of S(110)/S (St) which is the ratio of the breaking strength S (110) after 1-hour storage of the film under atmospheric pressure at 110°C and at an absolute humidity of 10 g/m³ to the breaking strength S (St), and is 1.00 or greater.
<4> The electrode binder composition according to any one of <1> to <3>, in which the content ratio of the electrode binder polymer in the nonvolatile content is 80% by mass or more.
<5> The electrode binder composition according to any one of <1> to <4>, in which the electrode binder polymer is dispersed in the aqueous medium.
<6> An electrode slurry, including the electrode binder composition according to any one of <1> to <5> and an electrode active material, or including a nonvolatile content of the electrode binder composition according to any one of <1> to <5>, an electrode active material, and a liquid medium, in which the nonvolatile content includes the electrode binder polymer.
<7> An electrode, including: a current collector; and an electrode active material layer formed on the current collector, in which the electrode active material layer includes a nonvolatile content of the electrode binder composition according to any one of <1> to <5> and an electrode active material, and the nonvolatile content includes the electrode binder polymer.
<8> A secondary battery including the electrode according to <7>.
<9> A method for manufacturing an electrode, the method including: an applying step of applying the electrode slurry according to <6> to a current collector; and a drying step of drying the electrode slurry applied onto the current collector.
<10> A method for manufacturing an electrode slurry, the method including mixing the electrode binder composition according to any one of <1> to <5>, and an electrode active material.
<11> A method for manufacturing an electrode slurry, the method including the steps of: preparing a nonvolatile content of the electrode binder composition according to any one of <1>-<5>; and
   mixing the nonvolatile content, an electrode active material, and a liquid medium, in which
   the nonvolatile content includes the electrode binder polymer.

### [Advantageous Effects of Invention]

The present disclosure can provide an electrode binder composition, an electrode slurry, an electrode, capable of obtaining a secondary battery having excellent high-temperature storability, a secondary battery, a method for manufacturing the electrode, and a method for manufacturing the electrode slurry.

### [Description of Embodiments}

Hereinafter, embodiments will be described in detail. However, the present disclosure is not limited to the following embodiments. In the following embodiments, the constituent elements (including elemental steps, etc.) are not essential, unless otherwise specified. The same also applies to numerical values and ranges thereof and are not intended to limit the present disclosure.

In the numerical ranges shown with "to" in the present disclosure, the numerical values listed before and after "to" are included as minimum and maximum values, respectively. "A or more" in a numerical range means A and a range more than A. "A or less" in a numerical range means A and a range less than A. In the numerical ranges stated in stages in the present disclosure, the upper limit value or the lower limit value stated within one numerical range may be replaced with the upper limit value or the lower limit value of the numerical range stated in other stages. In addition, in the numerical range described in the present disclosure, the upper limit value or the lower limit value of the numerical range may be replaced with the values shown in Examples.

In the present disclosure, each component may contain a plurality of types of the corresponding substances unless otherwise specified. When a plurality of substances corresponding to respective component are presents in the composition, or the like, the content ratio or content of each component means the total content ratio or content of the plurality of substances present in the composition, or the like, unless otherwise specified.

The term "layer" in the present disclosure also includes, in addition to the case where, when a region including the layer present therein is observed, the layer is formed over the entire region, the case where the layer is formed only on a part of the region.

In the present disclosure, the term "(meth)acrylic" is the generic term of acrylic and methacrylic. The term "(meth)acrylate" is the generic term of acylate and methacrylate.

In the present disclosure, the term "ethylenically unsaturated bond" refers to an ethylenically unsaturated bond having radical polymerizability, unless otherwise specified.

The "nonvolatile content" in the composition is the component left as a solid or a liquid after drying the composition at 105°C for 1 hour while circulating the air in the dryer at 1 atmosphere (1013 hPa). The forms of the composition include, but are not limited to a solution, a dispersion, and a slurry.

The "nonvolatile content concentration" in the composition is the mass ratio (mass%) of the mass of the components left as a solid or a liquid after weighing 1 g of the composition on an aluminum dish with a diameter of 5 cm and drying the composition at 105°C for 1 hour while circulating the air in the dryer at 1 atmosphere (1013 hPa) to the mass (1 g) of the composition before drying.

Unless otherwise specified, "a film obtained from the composition" refers to a film obtained by drying the composition under the conditions of under atmospheric pressure at 23°C and at an absolute humidity of 10 g/m³ for 5 days, and then under 0.01 MPa or less at 60°C for 12 hours. The thickness of this film is 0.3 mm to 0.6 mm.

### <Electrode binder composition>

The electrode binder composition of the present disclosure is an electrode binder composition including an electrode binder polymer having a first functional group which is at least one selected from the group consisting of a carboxy group and a carboxy group forming a salt, and a second functional group which is at least one selected from the group consisting of an isocyanato group and a blocked isocyanato group, and an aqueous medium, in which the breaking strength S (St) of the film obtained by drying the electrode binder composition under the conditions of under atmospheric pressure at 23°C and at an absolute humidity of 10 g/m³ for 5 days, and then under 0.01 MPa or less at 60°C for 12 hours is 4.00 MPa or more.

The electrode binder composition may contain other components together with the electrode binder polymer and the aqueous medium. Specifically, the electrode binder composition may contain components used for the synthesis of the electrode binder polymer, and the like.

The electrode binder composition of the present disclosure is preferably used for manufacturing of electrodes for non-aqueous secondary batteries, more preferably used for manufacturing of electrodes for lithium ion secondary batteries, and further preferably used for manufacturing of negative electrodes for lithium ion secondary batteries.

In the electrode binder composition of the present disclosure, the electrode binder polymer is preferably dispersed in water. In the present disclosure, "the electrode binder polymer being dispersed in water" refers to a state in which the electrode binder polymer is present in water without coagulation and sedimentation. For example, it can be confirmed by visual confirmation of sedimentation, measurement of the concentration gradient in the height direction in the vessel, and the measurement of the particle size by Dynamic Light Scattering method (DLS).

The electrode binder composition is more preferably an emulsion in which the particles containing the electrode binder polymer are dispersed in an aqueous medium. As the particles including the electrode binder polymer, mention may be made of particles including the electrode binder polymer, particles including the electrode binder polymer and a surfactant, particles further including other components, and the like. Further, in the electrode binder composition, particles containing the electrode binder polymer and particles not containing the electrode binder polymer may coexist.

The electrode binder composition of the present disclosure may be a dispersion obtained by emulsion polymerization of an ethylenically unsaturated compound as described later. Further, the electrode binder composition of the present disclosure may be a dispersion in which an electrode binder polymer obtained by a method other than emulsion polymerization is dispersed in an aqueous medium.

In the present disclosure, the breaking strength of the film obtained from the electrode binder composition is referred to as S (St).

S (St) is 4.00 MPa or higher, preferably 6.00 MPa or higher, more preferably 8.00 MPa or higher, and further preferably 9.00 MPa or higher. The reason for this is as follows. When S (St) falls within the above range, the reduction of the charge/discharge capacity retention characteristics of the electrodes after storage at high temperatures can be suppressed, and further an increase in electrode resistance after storage at high temperatures can be suppressed.
The upper limit value of S (St) is not particularly limited, and higher S (St) is more preferable.

In the present disclosure, the breaking strength after storing a film obtained from the electrode binder composition under atmospheric pressure at 110°C and at an absolute humidity of 10 g/m³ for 1 hour is referred to as S (110).

S (110) is preferably 6.00 MPa or higher, more preferably 8.00 MPa or higher, further preferably 10.0 MPa or higher, and particularly preferably 11.0 MPa or higher. The reason for this is as follows. When S (110) falls within the above range, the decrease in charge/discharge capacity retention characteristics of the electrodes after storage at high temperatures can be still further suppressed, and an increase in electrode resistance after storage at high temperatures can be still further suppressed.

The upper limit value of S (110) is not particularly limited, and is more preferably higher.

The value of S (110)/S (St), which is the ratio of S (110) to S (St), is preferably 1.00 or more, more preferably 1.10 or more, further preferably 1.20 or more, and particularly preferably 1.30 or more. The reason for this is as follows. When the value falls within the above range, the decrease in charge/discharge capacity retention characteristics of the electrodes after storage at high temperatures can be still further suppressed, and further, an increase in electrode resistance after storage at high temperatures can be still further suppressed.

The value of S (110)/S (St), which is the ratio of S (110) to S(St), is preferably 3.00 or less, more preferably 2.00 or less, and further preferably 1.50 or less. The reason for this is as follows. When the value falls in the above range, deterioration of the electrodes under high temperature environment can be suppressed.

The value of S (110)/S (St) may be 1.00 to 3.00, may be 1.10 to 2.00, may be 1.20 to 1.50, and may be 1.30 to 1.50.

The nonvolatile content concentration in the binder composition of the present disclosure is preferably 20% by mass or more, more preferably 25% by mass or more, and further preferably 30% by mass or more, from the viewpoint of increasing the amount of the effective components included in the electrode binder composition. The nonvolatile content concentration of the electrode binder composition can be adjusted according to the content of an aqueous medium included in the electrode binder composition.

The nonvolatile content concentration in the electrode binder composition is preferably 80% by mass or less, more preferably 70% by mass or less, and further preferably 60% by mass or less, from the viewpoints of suppressing an increase in the viscosity of the electrode binder composition and facilitating manufacturing of an electrode slurry, which will be described later.

The content ratio of the electrode binder polymer in the nonvolatile content of the electrode binder composition is preferably 80% by mass or more, more preferably 90% by mass or more, further preferably 95% by mass or more, and particularly preferably 98% by mass or more. The reason for this is as follows. When the content ratio falls within the above range, the high-temperature storability of a secondary battery manufactured using the electrode binder composition is more improved.

The content ratio of the electrode binder polymer in the nonvolatile content of the electrode binder composition is calculated on the assumption that the various monomers, surfactants and polymerization initiators used for manufacturing the electrode binder polymer all reacted as the electrode binder polymers.

### [Electrode binder polymer]

The electrode binder polymer has a first functional group which is at least one selected from the group consisting of a carboxy group and a carboxy group forming a salt, and a second functional group which is at least one selected from the group consisting of an isocyanato group and a blocked isocyanato group.

Incidentally, in the binder composition, the functional groups, and the like contained in the electrode binder polymer may react with other components to partially change the structure of the electrode binder polymer. In this case, the structure of the electrode binder polymer after the reaction is also referred to as the electrode binder polymer. That is, in the electrode binder composition, the electrode binder polymer also includes the corresponding polymer and the structure obtained after the reaction between the polymer and the other components.

In the case of the isocyanato group or the blocked isocyanato group present as the second functional group in the electrode binder polymer, it is considered that the isocyanato group generated by heating, voltage application, a chemical reaction, or the like, generates active species by an oxidation-reduction reaction at the time of charging and discharging in the electrode. It is considered that the electrode binder polymer strongly protects the surface of the electrode active material due to the reaction between the active species and at least one of the electrolytic solution, and the coating (SEI, Solid Electrolyte Interphase) generated on the surface of the electrode active material by oxidation-reduction of the electrolytic solution. The surface of the electrode active material which is strongly protected by the electrode binder polymer has excellent durability at temperatures as high as 60°C. This conceivably suppresses decomposition reactions of the electrolytic solution and the electrolyte which are generated on the surface of the electrode active material during the high-temperature storage, resulting in an improvement of the high-temperature storability.

The content F1 of the first functional group in the electrode binder polymer is preferably 0.20 mmol/g or more, more preferably 0.50 mmol/g or more, and further preferably 0.70 mmol/g or more. This is because the content F1 within the above-described range more suppresses peeling of the electrode active material layer from the current collector. In addition, this is because the content F1 within the above-described range improves the polymerization stability for manufacturing the electrode binder polymer, which can provide a high-quality electrode binder polymer at a low cost.

The content F1 of the first functional groups in the electrode binder polymer is preferably 5.0 mmol/g or less, more preferably 3.0 mmol/g or less, further preferably 1.5 mmol/g or less, and particularly preferably 1.0 mmol/g or less from the viewpoint of ensuring polymerization stability for manufacturing the present binder polymer.

The content F1 of the first functional groups in the electrode binder polymer may be 0.20 mmol/g to 5.0 mmol/g, may be 0.50 mmol/g to 3.0 mmol/g, may be 0.70 mmol/g to 1.5 mmol/g, and may be 0.70mmol/g to 1.0mmol/g.

The content F1 [mmol/g] of first functional groups is determined by the following method. 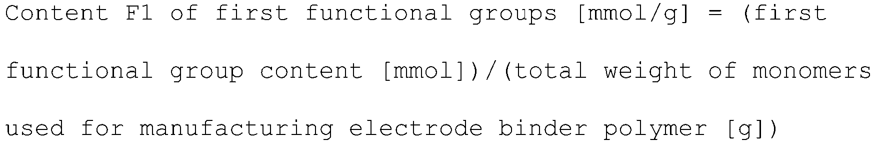 Content F1 of first functional groups [mmol/g] = (first functional group content [mmol])/(total weight of monomers used for manufacturing electrode binder polymer [g])

In the formula, the term "first functional group content [mmol]" is the total sum obtained by adding (substance amount (mmol) of a monomer having a first functional group) × (number of first functional groups possessed by one monomer having the first functional group) to all monomers having the first functional groups contained in the electrode binder polymer.

The content F2 of the second functional groups of the electrode binder polymer is preferably 0.020 mmol/g or more, more preferably 0.050 mmol/g or more, and further preferably 0.070 mmol/g or more. The reason for this is as follows. When the content F2 falls within the above range, the high-temperature storability of the electrodes containing the electrode binder polymer is still further improved.

The content F2 of the second functional groups of the electrode binder polymer is preferably 2.0 mmol/g or less, more preferably 1.0 mmol/g or less, further preferably 0.60 mmol/g or less, and particularly preferably 0.10 mmol/g or less. This is because, in the case of the above-mentioned range, the polymerization stability at the time of manufacturing the electrode binder polymer is improved, which improves the yield, so that the manufacturing cost of the electrode binder polymer can be reduced.

The content F2 of the second functional groups in the electrode binder polymer may be 0.020 mmol/g to 2.0 mmol/g, may be 0.050 mmol/g to 1.0 mmol/g, may be 0.070 mmol/g to 0.60 mmol/g, and may be 0.070 mmol/g to 0.10 mmol/g.

The content F2 of the second functional groups [mmol/g] is determined by the following method. 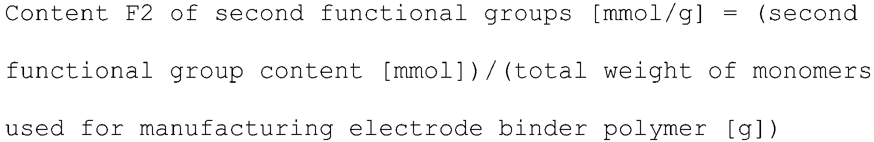 Content F2 of second functional groups [mmol/g] = (second functional group content [mmol])/(total weight of monomers used for manufacturing electrode binder polymer [g])

In the formula, the term "second functional group content [mmol]" is the total sum obtained by adding (substance amount (mmol) of a monomer having a second functional group) × (number of second functional groups possessed by one monomer having the second functional group) to all monomers having the second functional groups contained in the electrode binder polymer.

In the electrode binder polymer, from the viewpoint of improving the high-temperature storability of the battery using an electrode including the electrode binder polymer, the value of the ratio F2/F1 of the content F2 of the second functional groups to the content F1 of the first functional groups is preferably 0.020 or more, more preferably 0.050 or more, further preferably 0.070 or more, and particularly preferably 0.082 or more.

In the electrode binder polymer, from the viewpoint of ensuring the polymerization stability for manufacturing the electrode binder polymer, the value of the ratio F2/F1 of the content F2 of the second functional groups to the content F1 of the first functional groups is preferably 2.0 or less, more preferably 1.0 or less, further preferably 0.60 or less, and particularly preferably 0.10 or less.

In the electrode binder polymer, the value of the ratio F2/F1 of the content F2 of the second functional groups to the content F1 of the first functional groups may be 0.020 to 2.0, may be 0.050 to 1.0, may be 0.082 to 0.60, and may be 0.082 to 0.10.

In the present disclosure, a carboxy group forming a salt refers to a group in which the carboxy group forms a salt with a basic substance.

In the present disclosure, the blocked isocyanato group indicates a functional group resulting from the bonding between the isocyanato group and a blocking agent. Preferably, the blocked isocyanato group is of a structure capable of controlling the conversion into an isocyanato group.

The blocked isocyanato group is preferably of a structure to generate an isocyanato group by external stimulation, a chemical reaction, or the like, and is more preferably of a structure generating an isocyanato group by at least one selected from the group consisting of heating, voltage application, and a chemical reaction. The conversion of the blocked isocyanato groups to isocyanato groups can be caused by elimination of a blocking agent by an oxidation-reduction reaction due to a reaction by heating, chemical reaction with Lewis acid, Bronsted acid, or the like, an electrochemical reaction by voltage application, or the like.

As the blocking agent, mention may be made of methyl salicylate, 3,5-dimethylpyrazole, 2-butanone=oxime (methyl ethyl ketoxime), ε-caprolactam, 1-methoxy-2-propanol, or the like. From the viewpoint of easy elimination, the blocking agent preferably includes at least one selected from the group consisting of methyl salicylate, 3,5-dimethylpyrazole and 2-butanone=oxime.

The fact that the electrode binder polymer has the first functional group can be confirmed by quantitatively determining the amount of a carboxyl group or a carboxylate salt present by Infrared spectroscopy (IR), nuclear magnetic resonance spectroscopy (NMR) or the like.

Further, the fact that the electrode binder polymer has the second functional group can be confirmed by quantitatively determining the amount of the blocking agent bonded to the isocyanato group or the block isocyanato group by Infrared spectroscopy (IR), nuclear magnetic resonance spectroscopy (NMR) or the like.

The glass transition point Tg of the electrode binder polymer is preferably -3°C or higher, more preferably 0°C or higher, and further preferably 5°C or higher. This is due to the following: when the glass transition point Tg is in the above range, the breaking strength of the film of the electrode binder polymer is improved, and an increase in electrode resistance after the electrode containing the electrode binder polymer is placed under high temperature environment is suppressed.

From the viewpoint of ensuring the electrode peeling strength of the electrode including the electrode binder polymer, the glass transition point Tg of the electrode binder polymer is preferably 50°C or lower, more preferably 30°C or lower, further preferably 20°C or lower, and particularly preferably 10°C or lower.

The glass transition point Tg of the electrode binder polymer may be -3°C to 50°C, may be 0°C to 30°C, may be 5°C to 20°C, and may be 5°C to 10°C.

The glass transition point Tg of the electrode binder polymer is the peak top temperature of the chart obtained as temperature differential by performing the measurement at a heating rate of 10°C/min, under a nitrogen gas atmosphere using a differential scanning calorimetry (DSC) apparatus (for example, EXSTAR DSC/SS7020 manufactured by Hitachi High-Tech Science, Ltd.).

The solubility of the electrode binder polymer in 25°C water is preferably 1.0 g/100 g H₂O, or less, more preferably 0.50 g/100 g H₂O, or less, and further preferably 0.30 g/100 g H₂O, or less. When the solubility is in the above range, it is possible to suppress an increase in viscosity for an electrode binder composition. Further, when the solubility falls within the above range, the electrode binder polymer is present in the form of particles in the electrode manufactured by using the electrode binder composition. As a result of this, an electrolytic solution becomes more likely to permeate among the particles, and the electrode resistance tends to decrease.

### [Structural example of electrode binder polymer]

The electrode binder polymer of the present disclosure is not particularly limited as to a skeleton thereof, so long as it has a first functional group and a second functional group. For example, the electrode binder polymer may include a structural unit having a first functional group and a structural unit having a second functional group. Hereinafter, a structural unit having a first functional group will also be referred to as a first structural unit, and a structural unit having a second functional group will also be referred to as a second structural unit.

The electrode binder polymer of the present disclosure may further contain one or more other structural units corresponding to none of the first structural unit and the second structural unit. As the other structural units, mention may be made of a third structural unit derived from an aromatic hydrocarbon monomer, a fourth structural unit derived from a nonionic monomer, and a fifth structural unit derived from a multifunctional monomer.

Each monomer may have an ethylenically unsaturated bond. In the present disclosure, the term "ethylenically unsaturated bond" refers to an ethylenically unsaturated bond having a radical polymerizability, unless otherwise specified. When each monomer has an ethylenically unsaturated bond, the structural units contained in the polymer are bonded to each other by the polymerization reaction of the ethylenically unsaturated bond possessed by each monomer. In this case, the structural units contained in the polymer are bonded covalently, unless otherwise specified.

Note that, in the case of a polymer having a structural unit A derived from a compound A having an ethylenically unsaturated bond, as an example, the chemical structure of the portion other than the portion corresponding to the ethylenically unsaturated bond of the compound A in the structural unit A of the polymer is the same as the chemical structure of the portion other than the ethylenically unsaturated bond of the compound A before polymerization. For example, the structural unit derived from styrene has the structure of "-CH₂CH(C₆H₅ (phenyl group))-" in the electrode binder polymer.

When each monomer has an ethylenically unsaturated bond, the monomer from which a certain structural unit in a polymer is derived refers to a compound having a structure in which, in the structural unit, bonds between two carbon atoms forming the main chain of the polymer are replaced with ethylenically unsaturated bonds for separation from other structural units.

Further, when the portion other than the main chain structure corresponding to an ethylenically unsaturated bond in a polymer, for example, the structure of a functional group such as a carboxy group is changed by a chemical reaction, or the like, the structural units are classified on the basis of the chemical structure after change. For example, when vinyl acetate is polymerized and then is saponified, the structural unit is not referred to as a structural unit derived from vinyl acetate, but as a structural unit derived from vinyl alcohol. For example, when ion exchange is carried out after performing polymerization of monomers having an ionic functional group, the structural units are classified on the basis of the chemical structure after ion exchange. Specifically, for example, when the corresponding structural unit is set to "-CH₂CH(COOH)-" by ion exchange after the polymerization of sodium acrylate, the structural unit is referred to not as a structural unit derived from sodium acrylate, but as a structural unit derived from an acrylic acid.

### [First structural unit]

The first structural unit has at least one selected from the group consisting of a carboxy group and a carboxy group forming a salt of a first functional group.

In the electrode binder polymer, the first structural units may be included singly alone, or may be included two or more thereof.

The first structural unit may have one carboxy group or two or more carboxy groups in one structural unit. The first structural unit may have one carboxyl group forming a salt or two or more carboxyl groups forming a salt in one structural unit. In the first structural unit, the total number of carboxy groups and carboxy groups forming salts contained in one structural unit is preferably 1 to 4, and more preferably 1 to 2.

As the carboxylic acid monomers from which the first structural unit is derived, mention may be made of unsaturated monocarboxylic acids such as methacrylic acid, acrylic acid, and crotonic acid; and unsaturated dicarboxylic acids such as itaconic acid and fumaric acid; and the like. From the viewpoint of suppressing the peeling of the electrode active material layer from the current collector, the carboxylic acid monomer preferably contains at least one selected from the group consisting of acrylic acid, methacrylic acid, and itaconic acid.

The proportion of the structural units derived from acrylic acid, methacrylic acid, and itaconic acid (when two or more types are included, the total proportion of the structural units derived therefrom) in the first structural unit is preferably 80 mol% or more, and may be 90 mol% or more, and may be 100 mol%.

Further, the carboxylic acid monomer may contain both of an unsaturated monocarboxylic acid and an unsaturated dicarboxylic acid from the viewpoint of improving the adhesion between the binder polymer and an active material or a current collector. When the carboxylic acid monomer includes both of an unsaturated monocarboxylic acid and an unsaturated dicarboxylic acid, the content ratio of the unsaturated dicarboxylic acid relative to the total amount of the unsaturated monocarboxylic acid and unsaturated dicarboxylic acid is preferably 1 mol% or more, more preferably 5 mol% or more, further preferably 10 mol% or more, and particularly preferably 15 mol% or more. Further, the content ratio of the unsaturated dicarboxylic acid relative to the total amount of the unsaturated monocarboxylic acid and the unsaturated dicarboxylic acid is preferably 70 mol% or less, more preferably 50 mol% or less, further preferably 40 mol% or less, and particularly preferably 30 mol% or less.

As the salt, mention may be made of a metal salt, an ammonium salt, and the like. Examples of the metal salt may include alkali metal salts such as a lithium salt, a sodium salt and a potassium salt.

### [Second structural unit]

The second structural unit has at least one selected from the group consisting of an isocyanato group and a blocked isocyanato group of the second functional group.

In the electrode binder polymer, the second structural units may be included singly alone or may be included two or more thereof.

As the isocyanate monomer from which the second structural unit is derived, mention may be made of compounds having a (meth)acryloyl group, a vinyl group or an allyl group, and from the viewpoint of the availability and the polymerization reactivity, a compound having a (meth)acryloyl group is preferable. The isocyanate monomer is preferably a compound having at least one selected from the group consisting of an isocyanato group and a blocked isocyanato group and a (meth)acryloyl group, and more preferably a (meth)acrylic acid ester having at least one selected from the group consisting of an isocyanato group and a blocked isocyanato group.

The proportion of the structural unit derived from a (meth)acrylic acid ester having at least one selected from the group consisting of an isocyanato group and a blocked isocyanato group in the second structural unit is preferably 80 mol% or more, may be 90 mol% or more, and may be 99 mol% or more.

In the total amount of the isocyanato groups and the blocked isocyanato groups possessed by the electrode binder polymer, the proportion occupied by the blocked isocyanato groups is preferably 50 mol% or more, may be 70 mol% or more, may be 90 mol% or more, and may be 100 mol%. A blocked isocyanato group tends to suppress the isocyanato group from being changed into an amino group by hydrolysis.

It should be noted that, although the case where the first functional group and the second functional group are respectively contained in separate structural units has been described as an example above, both of the first functional group and the second functional group may be included in one structural unit.

### [Third structural unit]

The third structural unit is a structural unit derived from an aromatic hydrocarbon monomer. When the electrode binder polymer has the third structural unit, the high-temperature storability of the battery using the electrode including the electrode binder polymer tends to be improved. In the electrode binder polymer, the third structural units may be included singly alone or may be included two or more thereof. The electrode binder polymer may not have the third structural unit.

Preferably, the aromatic hydrocarbon monomer has an ethylenically unsaturated bond, includes a hydrocarbon, and does not include atoms such as an oxygen atom. The third structural unit may have one aromatic ring, and may have two or more aromatic rings in one structural unit. In the third structural unit, the number of aromatic rings included in one structural unit is preferably 1 to 4, and more preferably 1. As the aromatic ring, mention may be made of a benzene ring which may have a substituent.

As aromatic hydrocarbon monomers, mention may be made of styrene, t-butylstyrene, α-methylstyrene, p-methylstyrene, 1,1-diphenylethylene, and the like.

### [Fourth structural unit]

The fourth structural unit is a structural unit derived from a nonionic monomer. When the electrode binder polymer contains the fourth structural unit, the flexibility and the electrode peeling strength of the electrode containing the electrode binder polymer tend to be improved. In the electrode binder polymer, the fourth structural units may be included singly alone or may be included two or more thereof. The electrode binder polymer may not have the fourth structural unit.

The nonionic monomer is preferably a nonionic (meth)acrylic acid ester having an ethylenically unsaturated bond and having none of an anionic functional group and a cationic functional group. The nonionic monomer preferably includes (meth)acrylic acid ester, and more preferably includes an alkyl (meth)acrylic acid ester.

The fourth structural unit may have a polar functional group. Polar functional groups include, but are not limited to, a hydroxy group, a cyano group, and the like. Incidentally, the hydroxy group as a polar functional group conceptually does not include an OH structure contained in an ionic functional group such as a carboxy group or a sulfo group (sulfonic acid group).

Examples of the nonionic monomers having polar functional groups may include 2-hydroxyethyl (meth)acrylate, 2-hydroxypropyl (meth)acrylate, and (meth)acrylonitrile.

### [Fifth structure unit]

The fifth structural unit is a structural unit derived from a multifunctional monomer. When the electrode binder polymer has the fifth structural unit, the electrolytic solution resistance tends to be improved. In the electrode binder polymer, the fifth structural units may be included singly alone, or may be included two or more thereof. The electrode binder polymer may not have the fifth structural unit.

It is preferred that the multifunctional monomer is a compound having a plurality of independent ethylenically unsaturation bonds. The term "a plurality of independent ethylenically unsaturated bonds" as used herein means a plurality of ethylenically unsaturated bonds which do not form conjugated dienes with each other.

The fifth structural unit may have one or more ethylenically unsaturated bonds remaining in the structural unit. For example, in the case of a divinylbenzene polymer, a structural unit derived from divinylbenzene may be a structure having no ethylenically unsaturated bond (the form in which both of the portions corresponding to the two ethylenically unsaturated bonds of divinylbenzene are incorporated into the chain of the polymer) or may be a structure having one ethylenically unsaturated bond (only the portion corresponding to one ethylenically unsaturated bond is incorporated into the chain of the polymer).

### [Other structural units]

The electrode binder polymer may have other structural units corresponding to none of the first to fifth structural units.

Compounds from which other structural units are derived include, but are not limited to, compounds having one ethylenically unsaturated bond and having other anionic functional groups than carboxy groups such as a sulfo group and a phosphate group or salts thereof, surfactants having one ethylenically unsaturated bond (which may be hereinafter referred to as "polymerizable surfactants"), a compound having one ethylenically unsaturated bond and having a function as a silane coupling agent (which may be hereinafter referred to as a "polymerizable silane coupling agent"), and the like.

### [Content ratio of each structural unit in electrode binder polymer]

The physical properties such as the glass transition point Tg of the electrode binder polymer, may be adjusted by adjusting the content ratio of the first to fifth structural units in the electrode binder polymer.

For example, the total content ratio of the first structural unit, the second structural unit, the third structural unit, and the fourth structural unit (hereinafter, "the first structural unit, the second structural unit, the third structural unit, and the fourth structural unit" may also be referred to as "first to fourth structural units") in the electrode binder polymer is preferably 90% by mass or more, more preferably 95% by mass or more, further preferably 97% by mass or more, may be 98% by mass or more, and may be 100% by mass. The total content ratio of the first to fourth structural units in the electrode binder polymer may be 99.5% by mass or less.

The manufacturing method of the electrode binder polymer is not particularly limited. For example, the electrode binder polymer can be synthesized by performing copolymerization (polymerization step) using a compound having a first functional group and an ethylenically unsaturated bond (also referred to as a "first monomer" hereinafter) and a compound having a second functional group and an ethylenically unsaturated bond (also referred to as a "second monomer" hereinafter). Further, copolymerization may be performed using at least one monomer selected from the group consisting of monomers for forming the third structural unit, monomers for forming the fourth structural unit, monomers for forming the fifth structural unit, and monomers for forming other structural units.

Examples of the method for copolymerizing respective monomers may include an emulsion polymerization method. As the emulsion polymerization method, common emulsion polymerization methods in which monomers are emulsion-polymerized in an aqueous medium can be applied. As the aqueous media, mention maybe made of the following.

### [Aqueous medium]

The aqueous medium in the electrode binder composition of the present disclosure preferably includes at least one selected from the group consisting of water and hydrophilic solvents, and more preferably is comprised of at least one selected from the group consisting of water and hydrophilic solvents. As the hydrophilic solvents, mention may be made of methanol, ethanol, isopropyl alcohol, N-methylpyrrolidone, and the like. The hydrophilic solvents may be used singly alone or may be used in combination of two or more thereof. The aqueous medium preferably includes water, more preferably includes 50% by mass or more of water, further preferably includes 70% by mass or more of water, and particularly preferably includes 90% by mass or more of water.

The electrode binder composition of the present disclosure may be a dispersion obtained by emulsion polymerization of an ethylenically unsaturated compound. Further, the electrode binder composition of the present disclosure may be a dispersion in which an electrode binder polymer obtained by a method other than emulsion polymerization is dispersed in an aqueous medium.

### [Other components]

Other components which can be included in the electrode binder composition of the present disclosure include a surfactant, a basic substance, other components used for synthesizing the electrode binder polymer, and the like.

The surfactant improves the dispersion stability of the components dispersed in the aqueous medium in the electrode binder composition. As the surfactant, an anionic surfactant or a nonionic surfactant is preferably used. The surfactants may be used singly alone or may be used in combination of two or more thereof.

Examples of the anionic surfactants may include alkylbenzene sulfonic acid salts, alkyl sulfate ester salts, polyoxyethylene alkyl ether sulfate ester salts, and fatty acid salts.

Examples of the nonionic surfactants may include polyoxyethylene alkyl ethers, polyoxyethylene alkyl phenyl ethers, polyoxyethylene polycyclic phenyl ethers, polyoxyalkylene alkyl ethers, sorbitan fatty acid esters, and polyoxyethylene sorbitan fatty acid esters.

The basic substance can improve the storage stability of the electrode binder composition by maintaining the pH of the electrode binder composition within the proper range. Examples of the basic substance may include ammonia, triethylamine, sodium hydroxide, and lithium hydroxide. The basic substances may be used singly alone, or may be used in combination of two or more thereof.

As the other components used for the synthesis of the electrode binder polymer, mention may be made of a component derived from an initiator, a component derived from a chain transfer agent, and the like.

### <Electrode slurry>

An electrode slurry of the present disclosure includes the electrode binder composition of the present disclosure and the electrode active material, or includes a nonvolatile content of the electrode binder composition of the present disclosure, an electrode active material, and a liquid medium, and the nonvolatile content includes the electrode binder polymer.

Therefore, in an aspect of the electrode slurries of the present disclosure, the components included in the electrode binder composition (electrode binder polymer and the aqueous medium and, surfactants, basic substances, other components and the like used in the synthesis of the electrode binder polymer, to be included, if required), and the electrode active material may be further included. Alternatively, in another aspect of the electrode slurry of the present disclosure, to the one obtained by removing the volatile content from the electrode binder composition (provided that the electrode binder polymer is included), an electrode active material and a liquid medium may be added.

The nonvolatile content of the electrode binder composition may include, in addition to the electrode binder polymer, for example, a surfactant, other components used for synthesizing the electrode binder polymer, and the like.

The components included in the electrode binder composition and the nonvolatile content may undergo chemical changes, etc., in the manufacturing steps of the electrode slurry. That is, here, the components included in the electrode binder composition and the nonvolatile content also include components derived from the electrode binder composition and the nonvolatile content.

The content of the electrode binder polymer in the electrode slurry is preferably 0.50 parts by mass or more, and more preferably 1.0 part by mass or more for every 100 parts by mass of the electrode active material. When the content of the electrode binder polymer is within the above range, the effect resulting from the inclusion of the electrode binder polymer tends to be exhibited still more sufficiently.

The content of the electrode binder composition in the electrode slurry is preferably 5.0 parts by mass or less, more preferably 4.0 parts by mass or less, and further preferably 3.0 parts by mass or less for every 100 parts by mass of the electrode active material. When the amount of the electrode binder polymer on the basis of the amount of the electrode active material is within the above range, the content of the electrode active material included in the electrode slurry can be increased, so that the charge-discharge characteristics tend to be excellent.

The content of the electrode active material in the electrode slurry is preferably 80 parts by mass or more, and more preferably 90 parts by mass or more for every 100 parts by mass of the electrode slurry. When the content of the electrode active material is within the above range, the charge discharge characteristics tend to be excellent.

The electrode active material is a material into and from which ions serving as charge carriers such as lithium ions can be intercalated and deintercalated. The ions serving as charge carriers are preferably alkali metal ions, more preferably lithium ions, sodium ions, and potassium ions, and further preferably lithium ions.

In the case where an electrode manufactured using an electrode slurry is a negative electrode, the electrode active material is the negative electrode active material. The negative electrode active material preferably includes at least one selected from the group consisting of a carbon material, a material containing silicon, and a material containing titanium. These materials used as the negative electrode active materials may be used singly alone, may be used in combination of two or more thereof, and may be used in a composite form.

Examples of the carbon material used as the negative electrode active material may include cokes such as petroleum coke, pitch coke, and coal coke, carbonized product of an organic polymers, and graphites such as artificial graphite and natural graphite. Examples of the material containing silicon, which is used as the negative electrode active material, may include a silicon simple substance and silicon compounds such as silicon oxide. Examples of the material containing titanium, which is used as the negative electrode active material, may include lithium titanate.

Preferably, the negative electrode active material includes at least one selected from the group consisting of a carbon material and a material including silicon. When the negative electrode active material is the above-mentioned material, the effect of improving the binding property between the negative electrode active materials and between the negative electrode active material and the current collector due to the electrode binder polymer included in the electrode slurry tends to be increased.

In the case where an electrode manufactured using an electrode slurry is a positive electrode, the electrode active material is a positive electrode active material. As the positive electrode active material, a substance nobler in standard electrode potential than the negative electrode active material is used. Specifically, as the positive electrode active material, mention may be made of lithium composite oxides containing nickel such as lithium composite oxides of Ni-Co-Mn system, lithium composite oxides of Ni-Mn-Al system, and lithium composite oxides of Ni-Co-Al system, lithium cobalt oxide (LiCoO₂), spinel type lithium manganate (LiMn₂O₄), olivine type lithium iron phosphate, chalcogen compounds such as TiS₂, MnO₂, MoO₃, and V₂O₅, and the like. The substances used as the positive electrode active materials may be used singly alone, or may be used in combination of two or more thereof.

The liquid medium is preferably at least one selected from the group consisting of water and hydrophilic solvents. As the hydrophilic solvents, mention may be made of methanol, ethanol, isopropyl alcohol, N-methylpyrrolidone, and the like. The liquid medium preferably includes the aqueous medium described in connection with the electrode binder composition. The liquid medium may be the same as or different from the aqueous medium used for synthesizing the electrode binder polymer. The liquid medium may be the same as or different from the aqueous medium used for the electrode binder composition. The liquid medium preferably includes water, more preferably includes 50% by mass or more of water, further preferably includes 70% by mass or more of water, and particularly preferably includes 90% by mass or more of water.

The electrode slurry may additionally contain a conductive auxiliary, a thickener, and the like.

As the thickeners, mention may be made of cellulose derivatives such as carboxymethyl cellulose (CMC), hydroxyethyl cellulose, and hydroxypropyl cellulose, the ammonium salts of the cellulose derivatives, alkali metal salts of cellulose derivatives, polyvinyl alcohol, polyvinyl pyrrolidone, poly(meth)acrylates, poly(meth)acrylamides, poly(meth)N-hydroxyalkylacrylamide and the like. From the viewpoint of dispersibility of the electrode active material in the electrode slurry, it is preferable that the thickener includes at least one selected from the group consisting of carboxymethyl cellulose, the ammonium salt of carboxymethyl cellulose, and the alkali metal salt of carboxymethyl cellulose.

When the electrode slurry includes the thickener, the content of the thickener in the electrode slurry is preferably 0.50 parts by mass or more, and more preferably 0.80 parts by mass or more for every 100 parts by mass of the electrode active material. When the amount of the thickener mixed falls within the above range, the electrode slurry tends to have good coatability.

Further, when the electrode slurry includes the thickener, the content of the thickener in the electrode slurry is preferably 3.0 parts by mass or less, more preferably 2.0 parts by mass or less, and further preferably 1.5 parts by mass or less for every 100 parts by mass of the electrode active material. When the amount of the thickener mixed is within the above range, the binding property between the electrode active materials included in the electrode active material layer and between the electrode active material and the current collector tends to become favorable.

As the conductive auxiliary, mention may be made of carbon black, carbon fiber, and the like. As carbon black, mention may be made of furnace black, acetylene black, Denka black (manufactured by Denka Corporation), and Ketchen black (manufactured by Ketchen Black International Corporation), or the like. As the carbon fibers, mention may be made of carbon nanotubes, carbon nanofibers, and the like. As the carbon nanotube, mention may be made of VGCF (manufactured by Resonac Corporation) which is a gas phase process carbon fiber.

The electrode slurry of the present disclosure is preferably used for manufacturing of electrodes for non-aqueous secondary batteries, more preferably used for manufacturing of electrodes for lithium ion secondary batteries, and further preferably used for manufacturing of negative electrodes for lithium ion secondary batteries.

### <Method for manufacturing electrode slurry>

Examples of a method for manufacturing the electrode slurry of the present disclosure may include a method for mixing the electrode binder composition of the present disclosure and an electrode active material. The electrode binder composition may include a thickener, a conductive auxiliary, other components, and the like.

Further, other examples of the method for manufacturing the electrode slurry of the present disclosure may include a method in which the nonvolatile content of the electrode binder composition of the present disclosure is prepared, and the nonvolatile content, an electrode active material, and a liquid medium are mixed. The non-volatile content of the electrode binder composition includes an electrode binder polymer, and further may include a thickener, a conductive auxiliary, other components, and the like.

Alternatively, with respect to the nonvolatile content, separately, a thickener, a conductive auxiliary, other components, and the like may be added and mixed to prepare electrode slurries.

### [Mixing step]

The electrode binder composition, the electrode active material, the thickener and the conductive auxiliary for use in the mixing step are as described above.

The order of mixing respective components is not particularly limited, and can be determined as appropriate. As the method for mixing respective components, mention may be made of a method using a device of a stirring type, a rotary type, a shaking type, or the like, and more specifically, mention may be made of a method using a planetary centrifugal mixer, a screw, an ultrasonic wave, or the like.

When a liquid medium is added at the mixing step, the liquid medium is preferably at least one selected from the group consisting of water and hydrophilic solvents. As the hydrophilic solvents, mention may be made of methanol, ethanol, isopropyl alcohol, N-methylpyrrolidone, and the like. The liquid medium may have the same composition as that of the aqueous medium used for synthesizing the electrode binder polymer, or may have a different composition. The liquid medium preferably includes water, more preferably includes 50% by mass or more of water, further preferably includes 70% by mass or more of water, and particularly preferably includes 90% by mass or more of water.

### <Electrode>

The electrode of the present disclosure includes a current collector and an electrode active material layer formed on the current collector, in which the electrode active material layer includes a nonvolatile content of the electrode binder composition of the present disclosure, and an electrode active material, and the nonvolatile content of the electrode binder composition includes the electrode binder polymer.

The shapes of the electrode include, but are not particularly limited to a laminate, a wound body, and the like. The electrode of the present disclosure is preferably an electrode of a non-aqueous secondary battery, more preferably an electrode of a lithium ion secondary battery, and further preferably a negative electrode of a lithium ion secondary battery.

The forming range of the electrode active material layer on the current collector is not particularly limited, and the electrode active material layer may be formed on the entire surface of the current collector, or the electrode active material layer may be formed only on a partial surface on the current collector. When the current collector is in a shape of a plate, foil, or the like, the electrode active material layers may be formed on both sides of the current collector, or may be formed only on one side.

The current collector is preferably a metal sheet. As the metals forming the metal sheet, mention may be made of iron, copper, aluminum, nickel, stainless steel, and the like. When the electrode of the present disclosure is a negative electrode of a lithium ion secondary battery, the current collector is preferably copper foil. The thickness of the metal sheet is not particularly limited, and is preferably from 0.001 mm to 0.5 mm.

The nonvolatile content of the electrode binder composition, the electrode active material, and the electrode binder polymer in the electrode active material layer can be further referred to by the nonvolatile content of the electrode binder composition described in connection with the electrode binder composition, the electrode active material, and the electrode binder polymer, respectively.

The content of the electrode binder polymer in the electrode active material layer is preferably 0.50 parts by mass or more, and more preferably 1.0 part by mass or more for every 100 parts by mass of the electrode active material. When the content of the electrode binder polymer is within the above range, the effect resulting from the inclusion of the electrode binder polymer tends to be exhibited still more sufficiently.

When the electrode includes a thickener, the content of the thickener in the electrode is preferably 0.50 parts by mass or more, and more preferably 0.80 parts by mass or more for every 100 parts by mass of the electrode active material.

When the electrode includes a thickener, the content of the thickener in the electrode is preferably 3.0 parts by mass or less, more preferably 2.0 parts by mass or less, and further preferably 1.5 parts by mass or less for every 100 parts by mass of the electrode active material. The binding property between the electrode active materials included in the electrode active material layer and between the electrode active material and a current collector tends to become favorable.

### <Method for manufacturing electrode>

The method for manufacturing an electrode according to the present disclosure includes an application step of applying an electrode slurry of the present disclosure to a current collector, and a drying step of drying the electrode slurry applied on the current collector.

The method for manufacturing an electrode according to the present disclosure may include other steps. Incidentally, in the following description, of the components used in each step, the details of the components described above will be omitted.

The electrode manufactured by the manufacturing method of the present disclosure is preferably an electrode of a non-aqueous secondary battery, more preferably an electrode of a lithium ion secondary battery, and further preferably a negative electrode of a lithium ion secondary battery.

The electrode slurries to be used may be those prepared by the above-mentioned method or may be commercially available.

### [Application step]

In the application step, the electrode slurry of the present disclosure is applied onto at least a portion of the surface of the current collector. The method for applying the electrode slurry onto the current collector is not particularly limited, and examples thereof may include a reverse roll method, a direct roll method, a doctor blade method, a knife method, an extrusion method, a curtain method, a gravure method, a bar method, a dip method, and a squeeze method. Among these application methods, in consideration of various physical properties such as the viscosity and the drying property of the electrode slurry, at least one method selected from the group consisting of a direct roll method, a doctor blade method, a knife method, and an extrusion method is preferably used. When these methods are applied, there is a tendency that an electrode active material layer having a smooth surface and a small thickness variation can be obtained.

The range in which the electrode slurry is applied onto the current collector is not particularly limited, and may be the entire surface of the current collector, or may be only a partial surface on the current collector. When the collector is in a form of a plate, foil, or the like, the electrode slurry may be applied onto both sides of the current collector, or may be applied onto only one side.

In the case where the electrode slurry is applied to both sides of the current collector, the slurry may be applied to one side at a time sequentially, or may be applied to both sides at a time. Further, the electrode slurry may be applied continuously or may be applied intermittently onto the current collector. The amount of the electrode slurry to be applied can be appropriately determined according to the designed capacity of the battery, the composition of the electrode slurry, or the like.

### [Drying step]

In the drying step, the method for drying the electrode slurry applied onto the current collector is not particularly limited. For example, hot air drying, low pressure drying, vacuum drying, (far) infrared drying, low-temperature air drying, or a combination thereof can be used.

The drying temperature and the drying time for drying the electrode slurry can be adjusted as appropriate depending on the concentration of the nonvolatile content in the electrode slurry, the application amount of the current collector, or the like. The drying temperature is not particularly limited, and is preferably 40°C to 350°C, and from the viewpoint of the productivity, the drying temperature is more preferably 60°C to 100°C. The drying time is not particularly limited, and is preferably 1 minute to 30 minutes.

The drying step can provide an electrode sheet having the electrode active material layer formed on the current collector. The obtained electrode sheet may be used as it is as an electrode or may be used as an electrode after having gone through other steps described below.

### [Other steps]

Examples of other steps may include a cutting step and a pressing step.

The cutting step is carried out, for example, after the drying step, and the electrode sheet is cut in order to have a suitable size and shape as an electrode. The method for cutting the electrode sheet is not particularly limited. Slits, laser, wire cut, cutter, Thomson or the like can be used.

The pressing step is performed, for example, after the drying step, to press the electrode sheet. The pressing step enables the electrode active material to be more strongly bound to the current collector, and the reduction of the thickness of the electrode can reduce the size of the battery. In the method for manufacturing an electrode, when the cutting step and the pressing step are performed, the pressing step may be performed before the cutting step, or may be performed after the cutting step.

As the pressing method, a common method can be used. As the pressing method, it is particularly preferable to use a mold pressing method or a roll pressing method. When a mold pressing method is used, the pressing pressure is not particularly limited, and is preferably 0.5 t/cm² to 5 t/cm².

When a roll pressing method is used, the pressing load is not particularly limited, and is preferably set at 0.5 t/cm to 10 t/cm. When the pressing load is set within the above-mentioned range, the above-mentioned effects due to pressing are easily obtained, and the reduction of the intercalation and deintercalation capacity of charge carriers such as lithium ions into and from the electrode active material tends to be able to be suppressed.

### <Secondary battery>

The secondary battery of the present disclosure includes the electrode of the present disclosure. The secondary battery of the present disclosure is preferably a non-aqueous secondary battery, and more preferably a lithium ion secondary battery. In the following, a lithium ion secondary battery will be described as a preferred example of the secondary battery of the present disclosure. It should be noted that the configuration of the secondary battery of the present disclosure is not limited to the examples described below.

One example of a lithium ion secondary battery has a configuration in which a positive electrode, a negative electrode, and an electrolytic solution are accommodated in an exterior body. The lithium ion secondary battery may include, for example, a separator between a positive electrode and a negative electrode, or may include other members, other than the foregoing configuration. The shape of the lithium ion secondary battery may be any shape of a coin shape, a button shape, a sheet shape, a cylindrical shape, a rectangular shape, a flat shape, and the like.

In the lithium ion secondary battery of one example of the present disclosure, it is preferable that one or both of the positive electrode and the negative electrode have a configuration according to the electrode of the present disclosure, and the negative electrode has the configuration of the electrode of the present disclosure.

When in the lithium ion secondary battery of one example of the present disclosure, only one of the positive electrode active material layer and the negative electrode active material layer has the configuration of the electrode of the present disclosure, the other electrode preferably includes polyvinylidene fluoride or the like as a binder in the electrode active material layer.

As the electrolytic solution, a non-aqueous liquid having ionic conductivity is preferably used. As the electrolytic solutions, mention may be made of a solution in which an electrolyte is dissolved in an organic solvent, an ionic liquid, and the like. From the viewpoint of obtaining a lithium ion secondary battery having a low manufacturing cost and a low internal resistance, the former is preferable.

As the electrolyte, an alkali metal salt can be used, and can be selected appropriately according to the kind of the electrode active material, and the like. As the electrolyte, mention may be made of LiClO₄, LiBF₆, LiPF₆, LiCF₃SO₃, LiCF₃CO₂ LiAsF₆, LiSbF₆, LiB₁₀Cl₁₀, LiAlCl₄, LiCl, LiBr, LiB(C₂H₅)₄, CF₃SO₃Li, CH₃SO₃Li, LiCF₃SO₃, LiC₄F₉SO₃, Li(CF₃SO₂)₂N, aliphatic lithium carboxylate, or the like. Further, other alkali metal salts can be used as the electrolytes.

The organic solvents for dissolving the electrolyte are not particularly limited, and include carbonic acid ester compounds such as ethylene carbonate (EC), propylene carbonate (PC), diethyl carbonate (DEC), ethyl methyl carbonate (EMC), dimethyl carbonate (DMC), fluoroethylene carbonate (FEC), and vinylene carbonate (VC), carboxylic acid esters such as ethyl acetate, propyl acetate, methyl propionate, ethyl propionate, and propyl propionate, and the like. The organic solvents may be used singly alone, or may be used in combination of two or more thereof. Of these, as the organic solvents, two or more kinds of linear carbonate type solvents are preferably used in combination.

The electrolytic solution may contain additives in addition to the above-mentioned components. Examples of the additives may include nitrile compounds, sulfur-containing compounds, and boron-containing compounds. As the nitrile compounds, mention may be made of succinonitrile, acetonitrile, and the like. As the sulfur-containing compounds, mention may be made of compounds having a sulfonyl group, a sulfonate group, a sultone structure, or the like such as methyl ethyl sulfone and 1,3-propanesultone. As the boron-containing compound, mention may be made of boric acid esters, or the like.

As the exterior body, the one formed with an aluminum laminate material including aluminum foil and a resin film or the like can be appropriately used, and the present invention is not limited thereto.

### [Examples]

Hereinafter, examples of embodiments of the present disclosure will be described in detail by way of Examples, but the embodiments are not limited to these Examples.

In the following Examples, negative electrodes of lithium ion secondary batteries were manufactured as an example of the electrode of the present disclosure, and lithium ion secondary batteries were manufactured as an example of the secondary batteries, which were compared with the negative electrodes of the lithium ion secondary batteries and the lithium ion secondary batteries of Comparative Examples, respectively. Further, the water used in the following Examples and Comparative Examples is ion exchanged water, unless otherwise specified.

### <Manufacturing of electrode binder polymer and electrode binder composition>

In each of Examples and Comparative Examples, respective monomers were mixed in their respective amounts (parts by mass) shown in Table 1, thereby manufacturing emulsions.

Then, an aqueous solution was prepared by dissolving a polymerization initiator in an amount (parts by mass) shown in Table 1 in 50 parts by mass of water.

Into a separable flask having a cooling tube, a thermometer, a stirrer, and a dropping funnel, 150 parts by mass of water was charged, and the temperature was raised to 80°C. To the separable flask, the monomer emulsion and the aqueous solution including the polymerization initiator dissolved therein were respectively continuously supplied with stirring at 80°C over 3 hours to effect emulsion polymerization, thereby obtaining emulsions including particles including the binder polymers of Examples 1 to 6, and Comparative Examples 1 to 3, and an aqueous medium.

The resulting emulsion was cooled to room temperature (25°C). Thereafter, 133 parts by mass of water and 25% by mass of ammonia water were added. As a result of this, the electrode binder compositions of Examples 1 to 6 and Comparative Examples 1 to 3 that were the emulsions in which the particles including each electrode binder polymer of Examples 1 to 6 or Comparative Examples 1 to 3 were dispersed in an aqueous medium were manufactured.

Monomer abbreviations in Table 1 represent the following.
St: Styrene
2-EHA: 2-Ethylhexylacrylate
BzMA: Benzyl methacrylate
2-HEMA: 2-Hydroxyethyl methacrylate
AA: Acrylic acid
IA Itaconic acid
DVB: Divinylbenzene
p-StSANa: Sodium p-styrenesulfonate
KH-10: Polyoxyethylene-1-(allyloxymethyl)alkyl ether sulfate ammonium salt (Aqualone KH-10, polymerizable surfactant, manufactured by Dai-ichi Kogyo Seiyaku Co., Ltd.)

As a monomer 2, a compound having a methacryloyloxy group and a blocked isocyanato group was used. Specifically, the following were used.
MOI-SM: 2-[[[2-[(2-methyl-1-oxo-2-propen-1-yl)oxy]ethyl]amino]carbonyl]oxy]-methyl benzoate (KARENZ MOI-SM, (manufactured by Resonac Corporation))
MOI-BP: 2-[(3,5-dimethylpyrazolyl)carbonylamino]ethyl methacrylate (KARENZ MOI-BP, (manufactured by Resonac Corporation))
MOI-BM: 2-[0-(1'-methylpropylidenamino)carboxyamino]ethyl methacrylate (KARENZ MOI-BM (manufactured by Resonac Corporation))

Rongalite SFS in the polymerization initiator is the trade name of Rongalite manufactured by SUMITOMO SEIKA CHEMICALS CO.,LTD. The amount of ammonia as the basic substance shown in Table 1 is the amount of ammonia contained in aqueous ammonia (parts by mass). The amount of water as the aqueous medium shown in Table 1 is the total amount of water (parts by weight) contained in the electrode binder composition.

The content F1 of the first functional groups and the content F2 of the second functional groups in the electrode binder polymer were determined by the method described above.

### [Measurement of glass transition point Tg]

The binder compositions of Examples 1 to 6 or Comparative Examples 1 to 3 were applied onto a release PET (polyethylene terephthalate) film, and were dried at 50°C for 5 hours. In this manner, a film including the binder polymer and having a thickness of 2 mm was obtained.

Square specimens 2 mm in length and 2 mm in width were cut out from the obtained film. The specimen was sealed hermetically in an aluminum pan, and using a differential scanning calorimeter (EXSTAR DSC/SS7020, manufactured by Hitachi High-Tech Science Co., Ltd.) under a nitrogen gas atmosphere at a heating rate of 10°C/min, the differential scanning calorimetry (DSC) measurement of the specimen was performed. The temperature range for the DSC measurements was set at -40°C to 200°C. Then, the peak top temperature of the DSC chart obtained as a temperature differential of DSC was measured, and this temperature was referred to as the glass transition point Tg (°C) of the electrode binder polymer.

### [Measurement of nonvolatile content concentration of electrode binder composition]

The nonvolatile content concentration (mass%) of each electrode binder compositions of Examples 1 to 6 or Comparative Examples 1 to 3 was determined by the method described above.

The content ratio of the electrode binder polymer in the nonvolatile content of the electrode binder composition was calculated on the assumption that the various monomers, surfactants and polymerization initiators used for manufacturing of the electrode binder polymer all reacted as the electrode binder polymer.

### <Evaluation of electrode binder>

### [Measurement of film breaking strength]

The electrode binder compositions manufactured in each of the Examples and Comparative Examples was applied onto a glass plate covered with a polypropylene sheet thereon, and was dried under atmospheric pressure and at 23°C and at an absolute humidity of 10 g/m³ (relative humidity of 50% RH) for 5 days, followed by vacuum drying under 0.01 MPa, or less, at 60°C for 12 hours, thereby forming a film having a thickness of 0.4 mm. The resulting film was peeled from the polypropylene sheet to prepare the following film (I) or (II).
(I) a film to be subjected to the measurement as it is after peeling from the polypropylene sheet
(II) a film left standing under atmospheric pressure at 110°C and at an absolute humidity of 10 g/m³ for 1 hour

The respective films obtained in (I) and (II) were punched into a length of 60 mm and a width of 10 mm, resulting in specimens. Incidentally, the atmospheric pressure is assumed to be 1013 hPa.

Each specimen was subjected to a tensile test using a precision universal testing machine, Autograph AG-20kNX, manufactured by Shimadzu Corporation, and the film breaking strength [MPa] was measured. The tensile direction is the longitudinal direction of the specimen. The chuck positions were set at two points: 5mm from the center in the longitudinal direction (positions 30mm from both sides in parallel with the width direction) on each side. That is, the distance between the chucks was set to 10 mm. The tensile speed, namely, the test speed, was set at 100 mm/min. Incidentally, the tensile test was conducted under atmospheric pressure at 23°C and at an absolute humidity of 10 g/m³ (relative humidity of 50% RH).

The value obtained by dividing the maximum value of the load detected in the above test by the cross sectional area of 10 mm × 0.4 mm of the specimen is shown in Table 1 as the film breaking strength S (St) [MPa] after having been left standing at 23°C, and the film breaking strength S (110) [MPa] after having been left standing at 110°C of the electrode binder. Further, the value of S (110)/S (St) that is the ratio of S (110) to S (St) is also shown in Table 1.

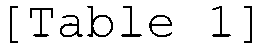

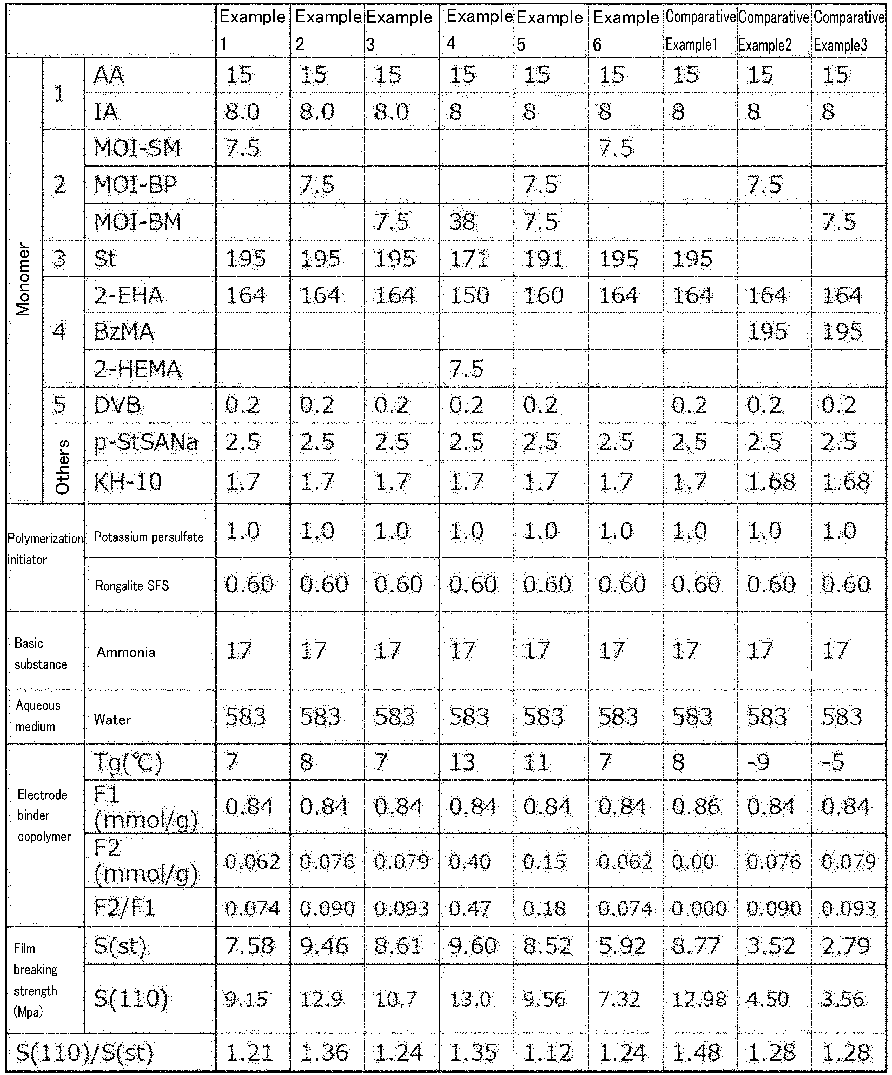

### <Manufacture of lithium ion secondary battery>

Using the electrode binder compositions of Examples 1 to 6 and Comparative Examples 1 to 3, negative electrodes were manufactured in the following manner, and using the negative electrodes, lithium ion secondary batteries of Examples 1 to 6 and Comparative Examples 1 to 3 were manufactured, respectively.

### (Manufacturing of positive electrode)

Ninety four parts by mass of LiNi_{0.6}Mn_{0.2}Co_{0.2}O₂ as a positive electrode active material, 3 parts by mass of acetylene black as a conductive auxiliary, and 3 parts by mass of polyvinylidene fluoride as a binder were mixed, resulting in a mixture. To the resulting mixture, 50 parts by mass of N-methylpyrrolidone was added for further mixing, resulting in a positive electrode slurry.

As the positive electrode current collector, aluminum foil having a thickness of 15 µm was prepared. The positive electrode slurry was applied onto both sides of the positive electrode current collector by a direct roll method. The amount of the positive electrode slurry to be applied to the positive electrode current collector was adjusted such that the thickness of the positive electrode slurry after a roll-press treatment described later may become 125 µm per one surface.

The positive electrode slurry applied onto the positive electrode current collector was dried at 120°C for 5 minutes, and pressed by a roll press method using a roll press (press load 5t/cm, roll width 7 cm, manufactured by THANK-METAL Co., Ltd.), resulting in a positive electrode sheet having positive electrode active material layers on both sides of the positive electrode current collector. The resulting positive electrode sheet was cut into a rectangular shape 50 mm in length and 40 mm in width, and was provided with conductive tabs, resulting in a positive electrode.

### [Manufacturing of negative electrode]

As a negative electrode active material, 96.9 parts by mass of artificial graphite (G49, manufactured by Jiangxi Zichen Technology Co., Ltd.), 3.6 parts by mass of any of the electrode binder compositions manufactured in Examples 1 to 6 and Comparative Examples 1 to 3 (1.4 parts by mass of nonvolatile content (binder polymer)), and 60 parts by mass of a 2 mass% aqueous solution of CMC (carboxymethyl cellulose-sodium salt, SUNROSE MAC 500LC manufactured by NIPPON PAPER Chemicals CO., LTD.) were mixed, and further, 16 parts by mass of water was added, and the mixture was mixed using a planetary centrifugal mixer (ARE-310, manufactured by THINKY CORPORATION.), resulting in a negative electrode slurry (electrode slurry).

Copper foil having a thickness of 10 µm was prepared as the negative electrode current collector. The negative electrode slurry was applied onto both sides of the negative electrode current collector by the direct roll method. The amount of the negative electrode slurry to be applied to the negative electrode current collector was adjusted such that the thickness after a roll press treatment described later may become 170 µm per one surface.

The negative electrode slurry applied onto the negative electrode current collector was dried at 90°C for 10 minutes and was pressed by a roll press method using a roll press (press load 8 t/cm, roll width 7 cm, manufactured by THANK-METAL Co., Ltd.), resulting in a negative electrode sheet having negative electrode active material layers on both sides of the negative electrode current collector. The resulting negative electrode sheet was cut into a rectangular shape 52 mm in length and 42 mm in width, and was provided with conductive tabs, resulting in negative electrodes.

### (Manufacturing of lithium ion secondary battery)

The positive electrode active material layer and the negative electrode active material layer were stacked so as to oppose each other with a separator (made of polyethylene, thickness 25 µm) including a polyolefin-based porous film interposed between the positive electrode and the negative electrode, and were accommodated in an exterior body (battery pack) including an aluminum laminated material. Subsequently, an electrolytic solution was poured into the exterior body, vacuum pressure impregnation was performed, and packing was performed by a vacuum heat sealer, resulting in a lithium ion secondary battery.

As the electrolytic solution, there was used the mixture of 99 parts by mass of solution obtained by dissolving LiPF₆ into a mixed solvent including ethylene carbonate (EC), ethyl methyl carbonate (EMC) and diethyl carbonate (DEC) in a volume ratio of EC: EMC: DEC = 30:50: 20, at a concentration of 1.0 mol/L and 1 part by mass of vinylene carbonate.

### <Evaluation of non-aqueous secondary battery>

For the lithium ion secondary batteries of Examples 1 to 6 and Comparative Examples 1 to 3, respectively, the discharge capacity retention rate after 500 cycles, the discharge capacity retention rate after storage at 60°C for 4 weeks, and the internal resistance (DCR) increase rate after storage at 60°C for 4 weeks were evaluated by the methods shown below, respectively. The results are shown in Table 2.

### [Discharge capacity retention rate after 500 cycles]

Under the condition of 45°C, charging-discharging was conducted with the following series of operations of steps (i) to (iv) shown below as one cycle. The time integration value of the current in the steps (i) and (ii) was referred to as the charge capacity, and the time integration value of the current in the step (iv) was referred to as the discharge capacity. Then, the discharge capacity at the first cycle and the discharge capacity at the 500-th cycle were measured, and the discharge capacity retention rate after 500 cycles was calculated by the following equation. 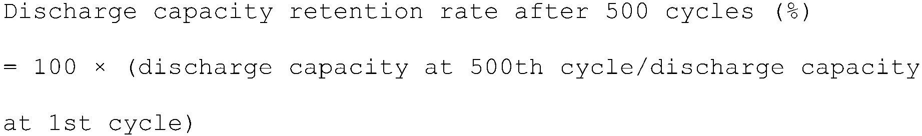 Discharge capacity retention rate after 500 cycles (%) = 100 × (discharge capacity at 500th cycle/discharge capacity at 1st cycle)
(i) Charging is performed with a current of 1 C until voltage becomes 4.2 V (constant current (CC) charging).
(ii) Charging is performed at a voltage of 4.2 V until the current becomes 0.05 C (constant voltage (CV) charging).
(iii) The battery is allowed to stand still for 30 minutes.
(iv) Discharging is performed with a current of 1 C until the voltage becomes 2.75 V (constant current (CC) discharging).

### [Discharge capacity retention rate after 60°C 4-week storage]

After CC charging is performed with a current of 1 C until the voltage becomes 4.2 V under the condition of 25°C, CV charging is performed until the current becomes 0.05 C. Then, CC discharging is carried out with a current of 1 C up to a voltage of 2.75 V, and the discharge capacity obtained at that time is defined as the discharge capacity before storage. Thereafter, after performing CC charging with a current of 1 C until a voltage of 4.2 V is reached again, CV charging is performed until the current reaches 0.05 C, resulting in a fully charged battery. The resulting fully charged battery was allowed to stand still under the condition of 60°C for 4 weeks. Then, CC discharging is performed under the condition of 25°C with a current of 1 C until the voltage reaches 2.75 V again, and the discharge capacity obtained at that time is defined as the discharge capacity after storage. From the discharge capacity before storage and the discharge capacity after storage, the discharge capacity retention rate after 60°C 4-week storage is calculated according to the following equation. $\begin{matrix}Discharge capacity retention rate \left(%\right) after 60 ° C 4 - week \\ storage \\ = 100 \times \left(\begin{matrix}discharge capacity after storage / discharge capacity \\ before storage\end{matrix}\right)\end{matrix}$

### [Internal resistance (DCR) increase rate after 60°C 4-week storage]

The internal resistance (DCR (Ω)) of the lithium ion secondary battery is measured under the condition of 25°C by the following procedure. That is, constant current charging/discharging was performed at 0.2 C from the rest potential up to a voltage of 3.6 V, and the charged state was set at 50% (SOC 50%) of the initial capacity. Thereafter, discharging was carried out for 60 seconds with each current value of 0.2 C, 0.5 C, 1 C, and 2 C. Incidentally, after each discharging, charging for returning to SOC 50% is performed. The internal resistance DCR (Ω) at a SOC 50% was determined from the relationship between these four current values (values per second) and the voltages.

The internal resistances (DCR) obtained by the above procedure were measured by the following stages (1) and (2), respectively.
(1) Before storage for 4 weeks under the conditions of full charging and 60°C
(2) After storage for 4 weeks under the conditions of full charging and 60°C

The internal resistance (DCR) measured in (1) was referred to as pre-storage DCR, and the internal resistance (DCR) measured in (2) was referred to as post-storage DCR. Thus, the internal resistance (DCR) after 60°C 4-week storage increase rate was calculated by the following equation. $\begin{matrix}Internal resistance \left(DCR\right) increase rate \left(%\right) after 60 ° C 4 - week \\ storage \\ = 100 \times \left(post-storage DCR/pre-storage DCR\right)\end{matrix}$

**[Table 2]**

| | | Example 1 | Example 2 | Example 3 | Example 4 | Example 5 | Example 6 | Comparative Example1 | Comparative Example2 | \| Comparative Example3 |
|---|---|---|---|---|---|---|---|---|---|---|
| Discharge capacity retention rate (%) | After 500 cycles | 76 | 77 | 76 | 76 | 76 | 76 | 75 | 74 | 74 |
| | After 60°C 4-week storage | 76 | 80 | 78 | 78 | 76 | 76 | 72 | 74 | 73 |
| DCR increase rate (%) after 60°C 4-week storage | | 115 | 112 | 113 | 112 | 115 | 115 | 128 | 125 | 126 |

### <Evaluation results>

Each electrode binder composition obtained in Examples 1 to 6 includes an electrode binder polymer having a first functional group, which is at least one selected from the group consisting of a carboxy group and a carboxy group forming a salt; and a second functional group, which is at least one selected from the group consisting of an isocyanato group and a blocked isocyanato group, and an aqueous medium. Further, the breaking strength S (St) of the film obtained from each electrode binder composition synthesized in Examples 1 to 6 is 4.00 MPa or higher. Then, any of the lithium ion secondary batteries manufactured by using the electrode binder compositions obtained in Examples 1 to 6 maintains a sufficient discharge capacity retention rate, and shows a small increase in DCR, even when stored at 60°C for 4 weeks.

On the other hand, for a secondary battery manufactured by using the electrode binder composition of Comparative Example 1 containing the electrode binder polymer not having a second functional group, a decrease in the discharge capacity retention rate after 60°C 4-week storage is observed, and an increase in DCR is large.

For the secondary batteries manufactured by using the electrode binder compositions of Comparative Example 2 and Comparative Example 3, in which the breaking strength S (St) of the films obtained from the electrode binder composition, is low, a decrease in discharge capacity retention after 60°C 4-week storage is observed, and an increase in DCR after 60°C 4-week storage is large.

From these, it can be said that when the electrode binder composition includes an electrode binder polymer having a first functional group which is at least one selected from the group consisting of a carboxy group and a carboxy group forming a salt, and a second functional group which is at least one selected from the group consisting of an isocyanato group and a blocked isocyanato group, and an aqueous medium, the breaking strength S (St) of the film obtained from the electrode binder composition is 4.00 MPa or higher, a secondary battery having excellent high-temperature storability can be obtained.

Incidentally, the lithium ion secondary batteries manufactured by using each electrode binder composition obtained in Examples 1 to 6 sufficiently maintained the discharge capacity retention rate even after 500 cycles.

The disclosures of Japanese Patent Application No. 2023-214286, Japanese Patent Application No. 2024-188626 and Japanese Patent Application No. 2024-188627 are incorporated in the present description by reference in their entirety. All publications, patent applications, and technical standards referred to herein are incorporated by reference to the same extent as if each individual publication, patent application, and technical standard were specifically and individually indicated to be incorporated by reference.

## Claims

1. An electrode binder composition, comprising: an electrode binder polymer having a first functional group that is at least one selected from the group consisting of a carboxy group and a carboxy group forming a salt and a second functional group that is at least one selected from the group consisting of an isocyanato group and a blocked isocyanato group; and an aqueous medium, wherein
a breaking strength S (St) of a film obtained by drying the electrode binder composition under conditions of under atmospheric pressure at 23°C and at an absolute humidity of 10 g/m³ for 5 days, and then, under 0.01 MPa or less at 60°C for 12 hours is 4.00 MPa or higher.

2. The electrode binder composition according to claim 1, wherein a breaking strength S (110) after further storage of the film under atmospheric pressure at 110°C and at an absolute humidity of 10 g/m³ for 1 hour is 6.00 MPa or more.

3. The electrode binder composition according to claim 1, wherein a value of S (110)/S (St), which is a ratio of the breaking strength S (110) after further storage of the film under atmospheric pressure at 110°C and at an absolute humidity of 10 g/m³ for 1 hour to the breaking strength S (St) is 1.00 or more.

4. The electrode binder composition according to claim 1, wherein a content ratio of the electrode binder polymer in a nonvolatile content is 80% by mass or more.

5. The electrode binder composition according to claim 1, wherein the electrode binder polymer is dispersed in the aqueous medium.

6. An electrode slurry, comprising: the electrode binder composition according to any one of claims 1 to 5 and an electrode active material, or comprising: a nonvolatile content of the electrode binder composition according to any one of claims 1 to 5, an electrode active material, and a liquid medium, wherein the nonvolatile content includes the electrode binder polymer.

7. An electrode, comprising: a current collector; and an electrode active material layer formed on the current collector, wherein the electrode active material layer includes a nonvolatile content of the electrode binder composition according to any one of claims 1 to 5, and an electrode active material, and the nonvolatile content includes the electrode binder polymer.

8. A secondary battery comprising the electrode according to claim 7.

9. A method for manufacturing an electrode, the method comprising: an application step of applying the electrode slurry according to claim 6 to a current collector; and a drying step of drying the electrode slurry applied to the current collector.

10. A method for manufacturing an electrode slurry, the method comprising: mixing the electrode binder composition according to any one of claims 1 to 5 and an electrode active material.

11. A method for manufacturing an electrode slurry, the method comprising the steps of: preparing a nonvolatile content of the electrode binder composition according to any one of claims 1 to 5; and
mixing the nonvolatile content, an electrode active material, and a liquid medium, wherein
the nonvolatile content includes the electrode binder polymer.
